# FASCICULE DE BREVET EUROPEEN

(11) **EP 3 271 563 B1**
(45) Date de publication et mention de la délivrance du brevet: **26.12.2018**
(21) Numéro de dépôt: 16715012.7
(22) Date de dépôt: 14.03.2016
(51) Int. Cl.: F02C 7/045

(54) **ENSEMBLE POUR TURBOMACHINE D'AÉRONEF COMPRENANT UN CARTER DE SOUFFLANTE ÉQUIPÉ D'UN REVÊTEMENT ACOUSTIQUE INTÉGRANT UN RAIDISSEUR DE CARTER DE SOUFFLANTE**
ANORDNUNG FÜR EIN FLUGZEUG-TL-TRIEBWERK MIT VENTILATORGEHÄUSE MIT AKUSTISCHER AUSKLEIDUNG MIT EINER LÜFTERGEHÄUSEVERSTEIFUNG
ASSEMBLY FOR AN AIRCRAFT TURBINE ENGINE COMPRISING A FAN CASING EQUIPPED WITH AN ACOUSTIC LINER INCORPORATING A FAN CASING STIFFENER

(30) Priorité: 16.03.2015 FR 1552132
(43) Date de publication de la demande: 24.01.2018
(73) Titulaire: SAFRAN AIRCRAFT ENGINES, 75015 Paris (FR)
(72) Inventeur: ZACCARDI, Cédric, 77550 Moissy Cramayel Cedex (FR); MARION, Gwenael, Sébastien, François, 77550 Moissy Cramayel Cedex (FR)
(74) Mandataire: Brevalex
(86) Numéro de dépôt international: PCT/FR2016/050556
(87) Numéro de publication internationale: WO 2016/146924

(56) Documents cités:
- WO-A1-2014/068261
- WO-A2-2010/012900
- FR-A1- 2 974 225
- GB-A- 2 452 476

## Description

### DOMAINE TECHNIQUE

La présente invention se rapporte au domaine des turbomachines d'aéronef, et plus particulièrement à celui d'un carter de soufflante et de son environnement.

L'invention s'applique en particulier aux turboréacteurs d'aéronef, de préférence à double flux et à double corps.

### ETAT DE LA TECHNIQUE ANTERIEURE

Sur les turbomachines d'aéronefs, le carter de soufflante définit une veine d'entrée d'air et se trouve agencé en regard des sommets des aubes de la soufflante, tel que cela est par exemple connu du document WO2012/164204 ou du document GB2452476.

Sur sa surface intérieure, le carter de soufflante porte habituellement des panneaux acoustiques, permettant l'absorption des ondes sonores. Sur sa surface extérieure, ce carter porte des équipements diverses comme des tuyaux, harnais, boîtiers, etc. Ces équipements sont prévus pour être recouverts par une nacelle entourant la turbomachine.

En outre, pour améliorer la tenue modale et éviter l'apparition de modes de vibration indésirables, le carter de soufflante est classiquement équipé de raidisseurs circonférentiels, à s'avoir des raidisseurs s'étendant longitudinalement sur tout ou partie de la circonférence du carter. Ces raidisseurs circonférentiels sont fixés sur la surface extérieure du carter de soufflante, ou bien réalisés d'une seule pièce avec ce dernier. Leur implantation est de ce fait contrainte par la présence des équipements agencés sur cette même surface extérieure. En d'autres termes, la présence des équipements conditionne le positionnement axial des raidisseurs sur le carter, ainsi que le positionnement axial et circonférentiel des fixations de ces raidisseurs sur le carter. L'implantation des raidisseurs circonférentiels est également contrainte par les vis de fixation des brides situées aux extrémités du carter, les brides servant au raccordement de ce carter sur les éléments adjacents de la turbomachine. Dans certains cas, l'implantation des raidisseurs peut également être contrainte par la présence des moyens de fixation des panneaux acoustique sur le carter. Globalement, ces contraintes d'implantation des raidisseurs circonférentiels ne permettent pas une parfaite optimisation de la tenue modale du carter de soufflante.

En outre, la présence des brides de carter empêche la mise en oeuvre de raidisseurs d'une seule pièce, sur 360°. Cela conduirait en effet à une impossibilité de montage des raidisseurs sur la surface extérieure du carter, du fait de la position des brides en saillie radialement vers l'extérieur.

Enfin, en étant positionnés autour du carter de soufflante, les raidisseurs circonférentiels présentent un diamètre élevé, impactant directement la masse globale de l'ensemble.

Il existe par conséquent un besoin d'optimisation de l'ensemble comprenant le carter de soufflante, ses panneaux acoustiques et ses raidisseurs circonférentiels, et les fixations des équipements de carter.

### EXPOSÉ DE L'INVENTION

Pour répondre au moins partiellement à ce besoin, l'invention a pour objet un ensemble pour turbomachine d'aéronef selon les caractéristiques de la revendication 1.

L'invention est ainsi avantageuse en ce qu'elle prévoit d'utiliser un raidisseur non seulement pour assurer la fonction de raidissement du carter de soufflante, mais également pour contribuer à la fixation d'un panneau acoustique sur ce même carter. En couplant ces deux fonctions, il n'est plus nécessaire de prévoir des moyens additionnels de fixation du panneau acoustique sur le carter, puisque cette fixation est obtenue directement par la fixation du raidisseur sur ce même carter. Il en découle avantageusement en gain de masse pour l'ensemble selon l'invention.

Par ailleurs, le fait que le raidisseur soit localisé à l'intérieur du carter, et non plus sur la surface extérieure de celui-ci, conduit à une réduction de son diamètre qui contribue également à une réduction de la masse globale de l'ensemble. La position intérieure du raidisseur permet en outre de s'affranchir des problèmes d'implantation rencontrés dans l'art antérieur, puisque la position axiale du raidisseur n'est contrainte ni par les équipements du carter, ni par les vis de fixation des brides de carter. Le positionnement axial et circonférentiel des fixations de ces raidisseurs est également plus libre. Cela contribue globalement à l'obtention d'une meilleure tenue modale du carter de soufflante.

En outre, puisque le raidisseur est agencé du côté de la surface intérieure du carter de soufflante, il peut être envisagé de le réaliser d'une seule pièce sur 360°, sans que cela n'entraîne des problèmes de mise en place.

L'invention présente de préférence au moins l'une des caractéristiques optionnelles suivantes, prises isolément ou en combinaison.

Ledit panneau acoustique comporte une peau extérieure et/ou une peau intérieure, ainsi qu'une âme de panneau de préférence en nid-d'abeilles.

Ladite âme de panneau comprend une première partie et une seconde partie séparées axialement l'une de l'autre par ledit raidisseur circonférentiel. Alternativement, le raidisseur pour être placé à une extrémité axiale du panneau, sans sortir du cadre de l'invention. Dans ce cas de figure, l'âme du panneau pourrait alors être préférentiellement enserrée entre deux raidisseurs agencés aux deux extrémités axiales du panneau acoustique, ou l'âme pourrait être enserrée entre un raidisseur et une peau.

Ledit raidisseur circonférentiel est fixé à la peau extérieure et/ou à la peau intérieure du panneau acoustique, et/ou ledit raidisseur circonférentiel est réalisé d'une seule pièce avec la peau extérieure et/ou avec la peau intérieure du panneau acoustique. Ces deux alternatives sont combinables, par exemple en prévoyant que le raidisseur est fixé à la peau extérieure et réalisé d'une seule pièce avec la peau intérieure, ou inversement. En cas de réalisation d'une seule pièce, c'est la semelle ou le talon du raidisseur qui forme une partie de la peau concernée. La solution est alors dite « à raidisseur intégré », par opposition à l'autre solution dite « à raidisseur rapporté », dans laquelle le raidisseur est fixé sur la/les peaux par exemple par collage et/ou vis, rivets, etc.

A cet égard, il est noté que ledit raidisseur circonférentiel comprend en effet une semelle, une âme de raidisseur, et de préférence un talon.

De préférence, lesdits moyens de fixation traversent le talon dudit raidisseur circonférentiel, et/ou lesdits moyens de fixation comportent des inserts logés dans l'âme du raidisseur.

Lesdits moyens de fixation peuvent être répartis circonférentiellement de manière régulière ou non régulière le long du raidisseur, en fonction des besoins rencontrés et de manière à contrer le plus efficacement possible les modes de vibration néfastes.

A titre d'exemples indicatifs, le raidisseur présente une section transversale en forme globale de I, U, L, T, S, Z ou Ω. D'autres formes peuvent néanmoins être envisagées, sans sortir du cadre de l'invention.

De préférence, l'ensemble comprend au moins un équipement fixé sur le carter de soufflante à l'aide desdits moyens de fixation. Avantageusement, il n'est plus nécessaire de prévoir des moyens de fixation spécifiques / additionnels pour l'intégration de ce/ces équipements sur le carter de soufflante. Cela engendre un gain sur la masse globale de l'ensemble.

Enfin, le raidisseur ainsi que le panneau acoustique dans lequel est intégré ce raidisseur s'étendent sensiblement selon un même secteur angulaire, compris de préférence entre 30 et 360°. Alternativement, ces deux éléments intégrés l'un dans l'autre pourraient s'étendre selon des secteurs angulaires différents.

L'invention a également pour objet une turbomachine d'aéronef comprenant un ensemble tel que décrit ci-dessus, la turbomachine étant préférentiellement un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'une turbomachine comprenant un ensemble selon l'invention ;
- la figure 2 représente une vue en demi-coupe axiale de l'ensemble, selon un mode de réalisation préféré de l'invention ;
- la figure 3 représente une vue agrandie d'une partie de l'ensemble montré sur la figure précédente ;
- la figure 4 représente une vue similaire à celle de la figure 3, selon un autre mode de réalisation préféré ;
- la figure 5 représente une vue similaire à celle de la figure 3, selon encore un autre mode de réalisation préféré ;
- la figure 6 représente une vue similaire à celle de la figure 3, selon encore un autre mode de réalisation préféré ;
- la figure 7a est une vue développée de la semelle du raidisseur de l'ensemble montré sur la figure 5 ; et
- la figure 7b est une vue similaire à celle de la figure 7a, selon un autre mode de réalisation.

### EXPOSÉ DÉTAILLÉ DE MODES DE RÉALISATION PRÉFÉRÉS

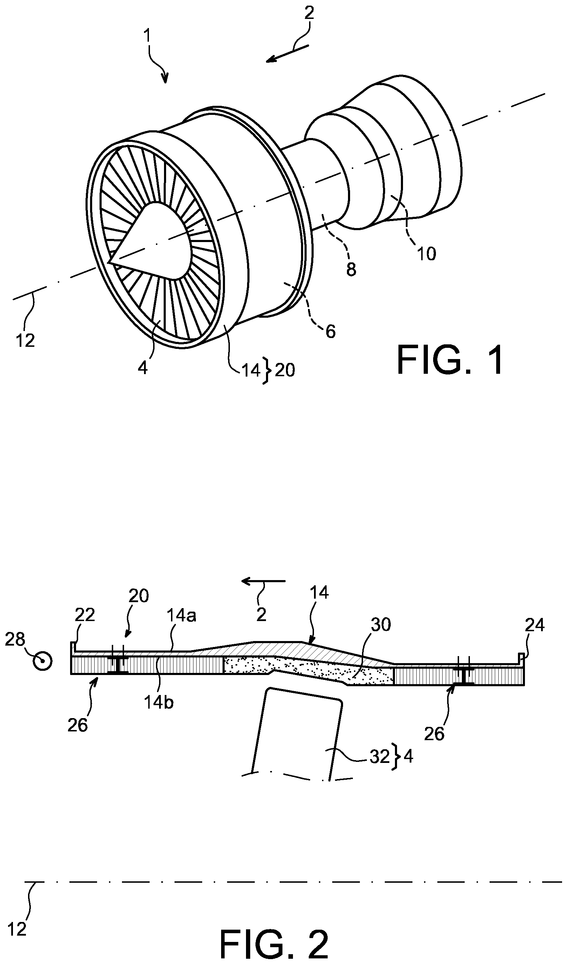

En référence tout d'abord à la figure 1, il est représenté une turbomachine 1 pour aéronef, du type turboréacteur à double flux et à double corps. Le turboréacteur 1 comporte, de l'avant vers l'arrière en référence à une direction de poussée 2 générée par le turboréacteur, une soufflante 4, un groupe de compresseurs 6, une chambre de combustion 8 et un groupe de turbines 10. Ces éléments conventionnels du turboréacteur sont centrés sur un axe longitudinal 12, et entourés d'un carter, en particulier un carter de soufflante 14 entourant la soufflante 4 mobile à rotation selon l'axe 12.

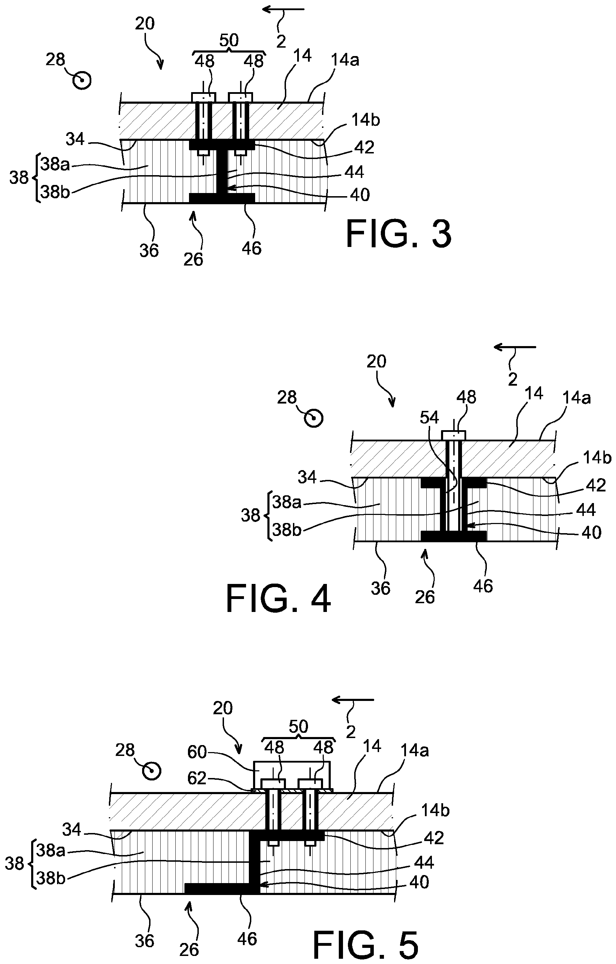

Le carter de soufflante 14, situé à l'avant du turboréacteur, appartient à un ensemble 20 faisant l'objet de l'invention, et dont un mode de réalisation préféré va maintenant être décrit en référence aux figures 2 et 3.

Le carter 14 peut être métallique ou réalisé en matériau composite fibres-matrice, généralement fibres-matrice organique. Il s'agit d'un élément structural du turboréacteur, centré sur l'axe 12 et prenant la forme générale d'un anneau. A son extrémité avant, le carter 14 comporte une première bride de jonction 22 destinée par exemple à l'assemblage de la structure d'entrée d'air. De manière analogue, le carter de soufflante 14 comporte une seconde bride de jonction 24 destinée à l'assemblage d'une virole extérieure d'un carter intermédiaire. Les deux brides 22, 24 font saillie radialement vers l'extérieur.

Sur la surface extérieure 14a du carter de soufflante, il est généralement prévu d'agencer des équipements (non représentés sur les figures 2 et 3), par exemple du type tuyaux, harnais, boîtiers, etc. Sur la surface intérieure 14b, le carter de soufflante 14 porte un ou plusieurs panneaux acoustiques permettant l'absorption des ondes sonores. Dans l'exemple représenté, il est prévu un premier panneau acoustique 26 situé à l'avant du carter, ainsi qu'un second panneau acoustique 26 situé à l'arrière de ce même carter. Chacun des deux panneaux s'étend par exemple de manière continue sur 360°, afin de former une virole de protection acoustique. Alternativement, chaque panneau pourrait s'étendre sur 360° en rapportant bout-à-bout plusieurs secteurs angulaires de panneau, dans la direction circonférentielle 28. Selon encore une autre alternative, la surface intérieure pourrait n'être que partiellement recouverte selon la direction circonférentielle, en prévoyant plusieurs secteurs angulaires de panneau espacés circonférentiellement les uns des autres. Pour des raisons de simplification de la rédaction, par la suite, il sera considéré que chaque panneau acoustique 26 s'étend de manière continue sur 360°, bien que l'invention puisse être mise en oeuvre pour toutes les configurations décrites ci-dessus.

Entre les deux panneaux acoustiques 26 espacés axialement l'un de l'autre, la surface intérieure 14b est revêtue d'une couche d'abradable 30 située radialement en regard des sommets des aubes 32 de la soufflante 4.

Les deux panneaux acoustiques 26 sont réalisés de manière identique ou similaire. Par conséquent, seul l'un d'eux va à présent être décrit, en référence à la figure 3.

Le panneau 26 comporte une peau extérieure 34 plaquée contre la surface intérieure 14b du carter 14. Il comporte également une peau intérieure 36 située radialement vers l'intérieur par rapport à la peau extérieure 34. Entre les deux peaux concentriques, le panneau 26 comporte une âme de panneau 38, de préférence réalisée à l'aide d'une structure en nid-d'abeilles. Les deux peaux 34, 36 sont de préférence réalisées en matériau composite fibres-matrice organique, par exemple à l'aide de fibres de verre et/ou de carbone.

L'une des particularités de l'invention réside dans l'intégration, au sein du panneau acoustique 26, d'un ou plusieurs raidisseurs circonférentiels 40 visant à renforcer le carter de soufflante pour en améliorer sa tenue modale et éviter l'apparition de modes de vibration indésirables. Pour simplifier la rédaction, il sera par la suite considéré que chaque panneau 26 comporte un unique raidisseur 40, s'étendant selon le même secteur angulaire que celui du panneau auquel il est intégré, à savoir ici sur 360°.

Dans le mode de réalisation préféré des figures 2 et 3, le raidisseur circonférentiel 40 s'étend dans un plan transversal de l'ensemble 20, en étant centré sur l'axe du carter 14. Néanmoins, en plus de s'étendre selon la direction circonférentielle 28, le raidisseur 40 pourrait également cheminer avec une composante axiale de manière à sortir d'un plan transversal, et former par exemple une hélice ou encore définir des zigzags. Cette éventuelle évolution du raidisseur 40 selon la direction axiale est retenue en fonction des besoins rencontrés.

Le raidisseur 40 est ici enserré entre les deux peaux 34, 36, au même titre que l'âme 38 du panneau qu'il sépare en deux parties distinctes 38a, 38b espacées axialement l'une de l'autre. De préférence, la première partie 38a et la seconde partie 38b de l'âme 38 sont chacune au contact du raidisseur 40, qui est ainsi protégé par cette âme 38. Une découpe particulière des chants de l'âme 38 en nid-d'abeilles permet d'obtenir une complémentarité de forme avec celle du raidisseur 40, qui comporte une semelle 42, une âme de raidisseur 44, et un talon 46. Plus précisément, le raidisseur 40 présente une section transversale en forme générale de I, les extrémités formant respectivement la semelle 42 et le talon 46.

La semelle 42 est en appui contre la peau extérieure 34 du panneau, et fixée à celle-ci à l'aide d'une colle et/ou de vis ou d'éléments similaires. De la même manière, le talon 46 est en appui contre la peau intérieure 36 du panneau, et fixée à celle-ci à l'aide d'une colle et/ou de vis ou d'éléments similaires.

Pour le raccordement du panneau acoustique 26 sur la surface intérieure 14b du carter de soufflante 14, il est astucieusement utilisé le raidisseur 40. Du fait de son intégration au panneau 26, la fixation du raidisseur 40 sur le carter 14 assure simultanément la fixation du panneau 26 sur ce même carter. Pour ce faire, il est prévu des moyens de fixation, par exemple des éléments 48 du type vis, boulons ou éléments similaires. Ces éléments de fixation 48 sont orientés sensiblement radialement et traversent chacun le carter de soufflante 14, la peau extérieure 34 ainsi que la semelle 42 du raidisseur. A titre d'exemple, il est prévu plusieurs points de fixation du raidisseur 40 le long de ce dernier, chaque point de fixation 50 étant obtenu à l'aide de deux éléments 48 disposés de part et d'autre de l'âme de raidisseur 44.

Dans une alternative représentée sur la figure 4, éventuellement combinable avec le mode de réalisation qui vient d'être décrit, les moyens de fixation comprennent des inserts 54 logés dans l'âme 44 du raidisseur. L'âme 44 peut être localement sur-épaissie pour permettre le logement de chaque insert 54, qui coopère avec un élément de fixation 48 du type vis, dont la tête est en appui sur la surface extérieure 14a du carter de soufflante.

Dans l'alternative représentée sur la figure 5, seule la forme du raidisseur circonférentiel 40 change, à savoir qu'elle présente une section transversale en forme de Z, avec les deux branches du Z sensiblement perpendiculaires à l'âme 44. Cette forme de la section transversale est également dénommée en « double L». Les deux branches précitées du Z constituent ainsi respectivement la semelle 42 et le talon 46 du raidisseur 40, la semelle 42 restant la partie de ce raidisseur qui coopère avec les éléments de fixation 48.

Toujours en référence à cette figure 5, il est noté que les éléments de fixation 48 peuvent également servir simultanément à la fixation d'un ou plusieurs équipements 60, agencés sur la surface extérieure 14a du carter 14. Pour ce faire, les éléments de fixation 48 traversent une platine 62 de fixation de l'équipement, ce qui permet à ce dernier de ne pas requérir de moyens de fixation additionnels. Cette fonctionnalité offerte par l'invention permet un gain en termes de coûts et de nombre de pièces de l'ensemble 20, et engendre donc aussi un gain de masse.

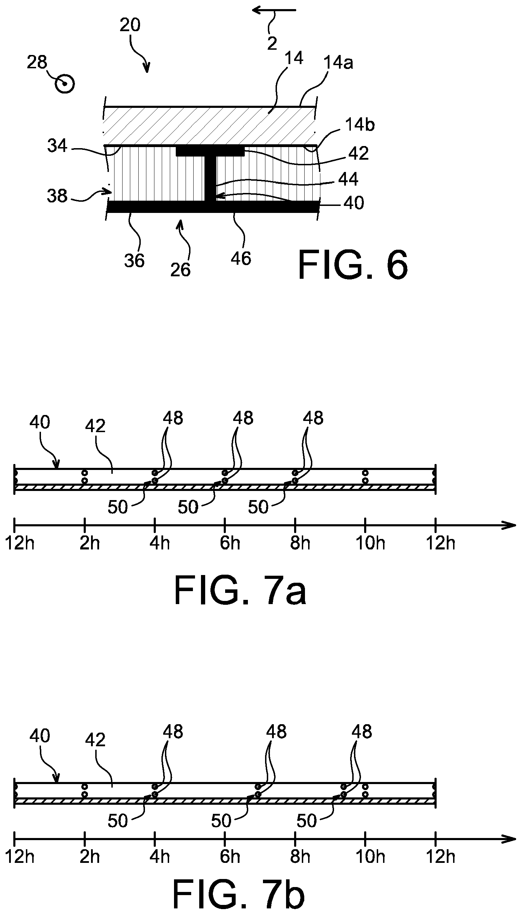

Dans les modes de réalisation des figures 2 à 5, le raidisseur 40 est dit rapporté au panneau 26 du fait de la fixation de la semelle 42 et du talon 46 sur les peaux 34, 36, respectivement. Un autre type de conception est néanmoins envisageable, dans lequel le raidisseur 40 est réalisé d'une seule pièce avec les peaux 34, 36 du panneau. Cette configuration, dite « intégré » et schématisée sur la figure 6, peut être envisagée pour des éléments métalliques mais s'avère en particulier avantageuse lorsque les peaux 34, 36 et le raidisseur 40 sont réalisés en matériau composite. Dans un tel cas, la semelle 42 du raidisseur 40 fait partie intégrante de la peau extérieure 34 du panneau, tandis que le talon 46 fait partie intégrante de la peau intérieure 36 de ce même panneau. En d'autres termes, une cocuisson peut être envisagée pour ces éléments 34, 40, 36 en matériau composite.

Dans ce mode de réalisation en particulier, les éléments de fixation 48 peuvent être remplacés par de la colle visant à relier la peau extérieure 34 à la surface intérieure 14b du carter 14. Une solution mixte mettant en oeuvre la colle et les éléments de fixation 48 du type vis peut également être envisagée. D'ailleurs, il est noté quel que soit le mode de réalisation envisagé, les panneaux acoustiques peuvent être initialement collés sur la surface intérieure 14b du carter de soufflante 14.

Dans tous les modes de réalisation préférés, les moyens de fixation 48 du raidisseur 40 sur le carter 14 peuvent être répartis circonférentiellement de manière régulière, comme cela a été représenté schématiquement sur la figure 7a correspondant à une vue du raidisseur 40 développée sur un plan. Les points de fixation 50 sont espacés de deux heures, en étant par exemple situés à 12, 2h, 4h, etc. dans un repère horaire centré sur l'axe longitudinal du turboréacteur.

Néanmoins, la liberté de positionnement des points de fixation 50 permet de les répartir de manière non régulière, si cela s'avère bénéfique pour améliorer la tenue modale en vibration du carter 14. Aussi, sur la représentation schématique de la figure 7b, les points de fixation 50 sont agencés de façon non régulière, par exemple à 12h, 2h, 4h, 7h, 9h et 10h.

Bien entendu, diverses modifications peuvent être apportées par l'homme du métier à l'invention qui vient d'être décrite, uniquement à titre d'exemples non limitatifs.

## Revendications

1. Ensemble (20) pour turbomachine (1) d'aéronef comprenant un carter de soufflante (14) présentant une surface intérieure (14b), au moins un panneau acoustique (26) fixé à l'aide de moyens de fixation (48, 54) sur ladite surface intérieure du carter de soufflante, ainsi qu'au moins un raidisseur circonférentiel (40) du carter de soufflante (14), où lesdits moyens de fixation (48, 54) relient le carter de soufflante (14) au raidisseur (40) intégré audit panneau acoustique (26), **caractérisé en ce que** lesdits moyens de fixation (48, 54) définissent plusieurs points de fixation (50) répartis circonférentiellement le long du raidisseur (40), ce dernier s'étendant d'une seule pièce sur toute la longueur circonférentielle du panneau (26) au sein duquel il est intégré.

2. Ensemble selon la revendication 1, **caractérisé en ce que** ledit panneau acoustique (26) comporte une peau extérieure (34) et/ou une peau intérieure (36), ainsi qu'une âme de panneau (38) de préférence en nid-d'abeilles.

3. Ensemble selon la revendication 2, **caractérisé en ce que** ladite âme de panneau (38) comprend une première partie (38a) et une seconde partie (38b) séparées axialement l'une de l'autre par ledit raidisseur circonférentiel (40).

4. Ensemble selon la revendication 2 ou la revendication 3, **caractérisé en ce que** ledit raidisseur circonférentiel (40) est fixé à la peau extérieure (34) et/ou à la peau intérieure (36) du panneau acoustique, et/ou **en ce que** ledit raidisseur circonférentiel (40) est réalisé d'un seul tenant avec la peau extérieure (34) et/ou avec la peau intérieure (36) du panneau acoustique.

5. Ensemble selon l'une quelconque des revendications précédentes, **caractérisé en ce que** ledit raidisseur circonférentiel (40) comprend une semelle (42), une âme de raidisseur (44), et de préférence un talon (46).

6. Ensemble selon la revendication 5, **caractérisé en ce que** lesdits moyens de fixation (48, 54) traversent le talon (42) dudit raidisseur circonférentiel (40), et/ou **en ce que** lesdits moyens de fixation (48, 54) comportent des inserts (54) logés dans l'âme (44) du raidisseur.

7. Ensemble selon l'une quelconque des revendications précédentes, **caractérisé en ce que** lesdits moyens de fixation (48, 54) sont répartis circonférentiellement de manière régulière le long du raidisseur circonférentiel (40).

8. Ensemble selon l'une quelconque des revendications précédentes, **caractérisé en ce qu'**il comprend au moins un équipement (60) fixé sur le carter de soufflante (14) à l'aide desdits moyens de fixation (48, 54).

9. Ensemble selon l'une quelconque des revendications précédentes, **caractérisé en ce que** le raidisseur circonférentiel (40) ainsi que le panneau acoustique (26) dans lequel est intégré ce raidisseur s'étendent sensiblement selon un même secteur angulaire, compris de préférence entre 30 et 360°.

10. Turbomachine (1) d'aéronef comprenant un ensemble (20) selon l'une quelconque des revendications précédentes.

## Patentansprüche

1. Gesamtanordnung (20) für Turbotriebwerke (1) von Luftfahrzeugen, die ein Gebläsegehäuse (14) umfasst, das eine Innenfläche (14b), mindestens eine Schalldämmplatte (26), die mit Befestigungsmitteln (48, 54) an der genannten Innenfläche des Gebläsegehäuses befestigt ist, sowie mindestens eine Umfangsversteifung (40) des Gebläsegehäuses (14) aufweist, wobei diese Befestigungsmittel (48, 54) das Gebläsegehäuse (14) mit der in der Schalldämmplatte (26) integrierten Versteifung (40) verbinden,
**dadurch gekennzeichnet,**
**dass** die genannten Befestigungsmittel (48, 54) mehrere am Umfang entlang der Versteifung (40) verteilte Befestigungspunkte (50) bestimmen, wobei diese Versteifung sich in einem Stück über die gesamte Umfangslänge der Platte (26) erstreckt, in die sie integriert ist.

2. Gesamtanordnung nach Anspruch 1,
**dadurch gekennzeichnet,**
**dass** die genannte Schalldämmplatte (26) eine Außenhaut (34) und/oder eine Innenhaut (36) sowie einen vorzugsweise wabenförmigen Plattenkern (38) aufweist.

3. Gesamtanordnung nach Anspruch 2,
**dadurch gekennzeichnet,**
**dass** der genannte Plattenkern (38) einen ersten Teil (38a) und einen zweiten Teil (38b) umfasst, die durch die Umfangsversteifung (40) voneinander getrennt sind.

4. Gesamtanordnung nach Anspruch 2 oder Anspruch 3,
**dadurch gekennzeichnet,**
**dass** die Umfangsversteifung (40) an der Außenhaut (34) und/oder an der Innenhaut (36) der Schalldämmplatte befestigt ist, und/oder dass diese Umfangsversteifung (40) in einem Stück mit der Außenhaut (34) und/oder mit der Innenhaut (36) der Schalldämmplatte ausgeführt ist.

5. Gesamtanordnung nach einem der vorherigen Ansprüche,
**dadurch gekennzeichnet,**
**dass** die Umfangsversteifung (40) einen Kopfflansch (42), einen Versteifungssteg (44) und vorzugsweise eine Sohle (46) umfasst.

6. Gesamtanordnung nach Anspruch 5,
**dadurch gekennzeichnet,**
**dass** sich die Befestigungsmittel (48, 54) durch den Kopfflansch (42) der Umfangsversteifung (40) hindurch erstrecken, und/oder dass diese Befestigungsmittel (48, 54) Einsätze (54) umfassen, die in dem Steg (44) der Versteifung aufgenommen sind.

7. Gesamtanordnung nach einem der vorherigen Ansprüche,
**dadurch gekennzeichnet,**
**dass** die Befestigungsmittel (48, 54) am Umfang entlang der Umfangsversteifung (40) in regelmäßigen Abständen angeordnet sind.

8. Gesamtanordnung nach einem der vorherigen Ansprüche,
**dadurch gekennzeichnet,**
**dass** sie zumindest ein Ausrüstungsteil (60) enthält, das an dem Gebläsegehäuse (14) mit den genannten Befestigungsmitteln (48, 54) befestigt ist.

9. Gesamtanordnung nach einem der vorherigen Ansprüche,
**dadurch gekennzeichnet,**
**dass** sich die Umfangsversteifung (40) sowie die Schalldämmplatte (26), in die diese Versteifung integriert ist, im Wesentlichen in einem und demselben Winkelbereich erstrecken, der vorzugsweise zwischen 30 und 360° beträgt.

10. Turbotriebwerk (1) für Luftfahrzeuge, das eine Gesamtanordnung (20) nach einem der vorherigen Ansprüche aufweist.

## Claims

1. Assembly (20) for an aircraft turbine engine (1) comprising a fan casing (14) having an inner surface (14b), at least one acoustic panel (26) fastened using fastening means (48, 54) to said inner surface of the fan casing, and at least one circumferential stiffener (40) of the fan casing (14), said fastening means (48, 54) connect the fan casing (14) to the stiffener (40) incorporated with said acoustic panel (26), **characterised in that** said fastening means (48, 54) define a plurality of fastening points (50) distributed circumferentially along the stiffener (40), the latter extending in one piece over the entire circumferential length of the panel (26) into which it is incorporated.

2. Assembly according to claim 1, **characterised in that** said acoustic panel (26) comprises an outer skin (34) and/or an inner skin (36), in addition to a panel core (38) that is preferably in the form of a honeycomb.

3. Assembly according to claim 2, **characterised in that** said panel core (38) comprises a first portion (38a) and a second portion (38b) that are axially separated from each other by said circumferential stiffener (40).

4. Assembly according to either claim 2 or claim 3, **characterised in that** said circumferential stiffener (40) is fastened to the outer skin (34) and/or to the inner skin (36) of the acoustic panel, and/or **in that** said circumferential stiffener (40) is made in one piece with the outer skin (34) and/or with the inner skin (36) of the acoustic panel.

5. Assembly according to any of the previous claims, **characterised in that** said circumferential stiffener (40) comprises a sole (42), a stiffener core (44), and preferably a heel (46).

6. Assembly according to claim 5, **characterised in that** said fastening means (48, 54) pass through the heel (42) of said circumferential stiffener (40), and/or **in that** said fastening means (48, 54) comprise inserts (54) housed in the core (44) of the stiffener.

7. Assembly according to any of the previous claims, **characterised in that** said fastening means (48, 54) are distributed circumferentially in an even manner along the circumferential stiffener (40).

8. Assembly according to any of the previous claims, **characterised in that** it comprises at least one equipment item (60) fastened to the fan casing (14) using said fastening means (48, 54).

9. Assembly according to any of the previous claims, **characterised in that** the circumferential stiffener (40) and the acoustic panel (26) into which this stiffener is integrated extend substantially along the same angular sector, preferably between 30 and 360°.

10. Aircraft turbine engine (1) comprising an assembly (20) according to any of the previous claims.
